# EUROPEAN PATENT APPLICATION

(11) **EP 4 794 005 A1**
(43) Date of publication of application: **19.08.2026**
(21) Application number: 25770917.0
(22) Date of filing: 21.03.2025
(51) Int. Cl.: H01M 4/13

(54) **BATTERY NEGATIVE ELECTRODE SHEET AND BATTERY**

(30) Priority: 27.12.2024 CN 202423264188 U
(71) Applicant: Eve Energy Co., Ltd., Huizhou, Guangdong 516000 (CN)
(72) Inventor: FAN, Hongyang, Huizhou, Guangdong 516006 (CN); HONG, Sifan, Huizhou, Guangdong 516006 (CN); LIU, Rongjiang, Huizhou, Guangdong 516006 (CN)
(74) Representative: Studio Torta S.p.A.
(86) International application number: PCT/CN2025/084156
(87) International publication number: WO 2026/137619

(57) **Abstract**

The present application provides a battery and a negative electrode sheet thereof. The battery negative electrode sheet includes a current collector and an active layer. The active layer is coated on the surface on at least one side of the current collector. The active layer has a plurality of grooves arranged in sequence along the length direction of the current collector. The grooves each extend along the width direction of the current collector. A plurality of regions in the active layer are separated by the plurality of grooves along the length direction of the current collector. Each region has a plurality of pores.

## Description

This application claims the priority to and benefit of Chinese Patent Applications No. 202423264188.9, filed with China National Intellectual Property Administration on December 27, 2024, the entire contents of which are incorporated herein by reference.

### Technical Field

The present application relates to the technical field of batteries, and in particular to a battery and a negative electrode sheet thereof.

### Background

With the development of new energy technology, battery technology is also constantly improving, especially lithium-ion batteries are widely used in new energy vehicles and other power tools.

At present, in the field of lithium-ion battery technology, the wettability and liquid retention of the electrolyte are one of the key factors affecting battery performance and service life. During the charge and discharge cycle of the battery, the uniformity and persistence of the electrolyte distribution are crucial to maintaining the stability of the battery and extending its service life. The loss of electrolyte will lead to an increase in the internal resistance of the battery, a decrease in capacity, and may even cause safety hazards.

In lithium-ion battery technology, the negative electrode coating surface density and compaction density are constantly pursuing extreme designs. After low-temperature charging, high-rate charging, or long-term cycling, it is easy for the negative electrode sheet to deposit lithium or develop purple (black) spots due to insufficient electrolyte, resulting in the battery's low-temperature or high-rate charging performance not meeting standards, greatly reducing the cycle life, and even causing battery safety hazards.

### Summary

From the above, it can be seen that the existing negative electrode sheet of battery has poor wettability, which affects the battery performance.

In a first aspect, a negative electrode sheet of a battery is provided, which includes a current collector and an active layer, wherein the active layer is coated on the surface of at least one side of the current collector, and the active layer has a plurality of grooves arranged in sequence and spaced apart along the length direction of the current collector, and the grooves extend along the width direction of the current collector, and the plurality of grooves along the length direction of the current collector separate the active layer into a plurality of regions, each region having a plurality of pores.

In a second aspect, the present application also provides a battery, including a battery cell and a casing, the battery cell including a positive electrode sheet, an electrolyte, a separator and a negative electrode sheet, and the battery cell is arranged inside the casing.

### Advantages of the Application

The negative electrode sheet of battery according to the present application has pores and grooves that are alternately arranged in sequence along the length direction of the current collector, which shortens the battery injection time, increases the electrolyte retention amount, improves the electrode wettability, and is conducive to extending the cycle life, improving the battery's service life and performance stability. In the present application, the active layer is processed to form corresponding grooves and pores, which is conducive to surface treatment of the active layer. The grooves have the function of retaining liquid and guiding liquid, and the pores have the function of retaining liquid. The grooves and the pores effectively improve the electrode's liquid retention performance and wettability, especially the alternately arranged grooves and pores improve the uniformity of electrolyte penetration, which is conducive to ensuring the stability of battery performance.

### Brief Description of the Drawings

FIG. 1 shows a top view of a negative electrode sheet of a battery according to a possible implementation of the present application.
FIG. 2 shows top view of a negative electrode sheet of a battery according to another possible implementation of the present application.

### Description of reference numerals:

100, negative electrode sheet of battery; 10, current collector; 20, active layer; 210, region; 30, groove; 40, pore.

### Detailed Description of the Embodiments

In the description of this application, unless otherwise clearly specified and limited, the terms "connected", coupled", and "fixed" should be understood in a broad sense, for example, it can be a fixed connection, a detachable connection, or an integral connection; it can be a mechanical connection or an electrical connection; it can be a direct connection or an indirect connection through an intermediate medium, it can be the internal connection of two elements or the interaction relationship between two elements. For those skilled in this field, the specific meanings of the above terms in this application can be understood according to the specific circumstances.

In the present application, unless otherwise clearly specified and limited, a first feature being "above" or "below" a second feature may include the first and second features being in direct contact, or may include the first and second features being in contact not directly but through another feature between them. Moreover, a first feature being "above", "on" and "over" a second feature includes the first feature being directly above and obliquely above the second feature, and the first feature having a higher horizontal height than the second feature. A first feature being "below", "under" and "beneath" a second feature includes the first feature being directly below and obliquely below the second feature, and the first feature having a lower horizontal height than the second feature.

In the description of this embodiment, the terms "upper", "lower", "left", "right", "front", "rear" and other directions or positional relationships are based on the directions or positional relationships shown in the drawings, and are for the convenience of description and simplification of operation, rather than indicating or implying that the device or element referred to must have a specific direction, be constructed and operate in a specific direction, and therefore cannot be understood as limiting the present application. In addition, the terms "first" and "second" are used to distinguish in the description and have no special meaning.

In order to solve the problem in the related art that the wettability of the negative electrode sheet of the battery is poor and thus affects the battery performance, the present application provides a battery, the battery including a battery cell and a casing, the battery cell is arranged inside the casing, wherein the battery cell includes a positive electrode sheet, an electrolyte, a separator and a negative electrode sheet.

Illustratively, the structural arrangement of the negative electrode sheet inside the battery of the present application improves the wettability of the electrolyte, thereby effectively improving the performance of the battery.

The battery is a lithium battery.

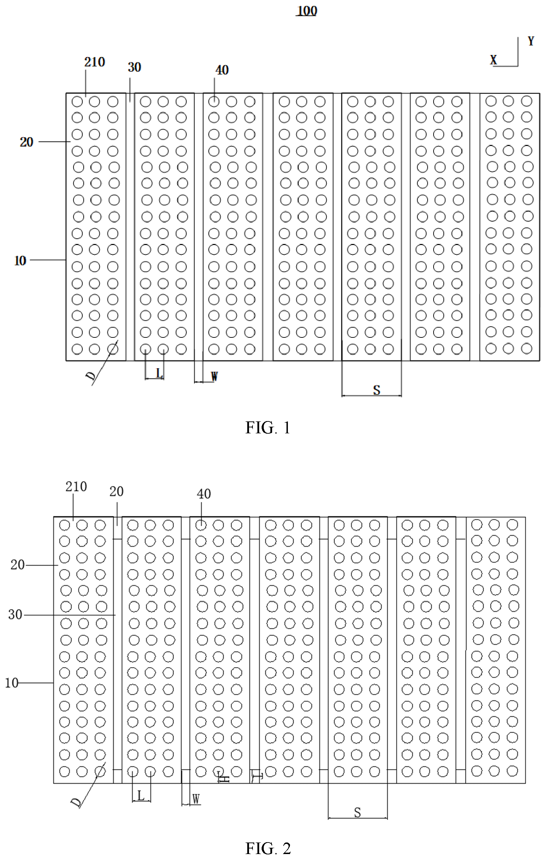

As shown in FIGs. 1 and 2, the negative electrode sheet of battery includes a current collector 10 and an active layer 20. The active layer 20 is coated on the surface of at least one side of the current collector 10. The active layer 20 has a plurality of grooves 30 arranged in sequence along the length direction of the current collector 10. The grooves 30 extend along the width direction of the current collector 10. A plurality of regions 210 in the active layer 20 are separated by the plurality of grooves 30 along the length direction of the current collector 10. Each region 210 has a plurality of pores 40.

The grooves 30 each extend along the width direction of the current collector 10, and there are multiple grooves 30, and the multiple grooves 30 are arranged at intervals along the length direction of the current collector 10 to form a region 210 for the pores 40 to be formed between two adjacent grooves 30, and multiple pores 40 are arranged inside the region 210.

In some embodiments, the current collector 10 is copper foil or carbon-coated copper foil, and the active layer 20 is disposed on the surface of the current collector 10. The active layer 20 not only has the effect of forming a gap in the active layer 20 for electrolyte to flow, but the active layer 20 is also disposed on the side surface of the current collector 10, which is beneficial to improving the strength of the current collector 10, and also has the effect of protecting the current collector 10.

When the current collector 10 is carbon-coated copper foil, the thickness of the copper foil is 3-12 µm, and the thickness of the carbon-coated layer of the carbon-coated copper foil is 0.2-2 µm.

It should be noted that the active layer 20 of the present application is a coating layer including an active material, and the active layer 20 may be directly coated on a copper foil, or may be coated on a copper foil having a carbon coating layer.

In some embodiments, the length direction of the current collector 10 is the X direction shown in FIG. 1, and the width direction of the current collector 10 is the Y direction shown in FIG. 1. It can be understood that the length and width of the current collector 10 in the present application are not limited by the placement position.

In some embodiments, the grooves 30 and the pores 40 are processed by laser, that is, the grooves are engraved by laser and the pores are made by laser. The application of laser processing technology can not only achieve high-precision manufacturing of the grooves 30 and the pores 40, but also can be flexibly adjusted according to different battery design requirements, thereby improving the flexibility and efficiency of battery manufacturing and reducing production costs.

Illustratively, the negative electrode sheet of battery of the present application have pores 40 and grooves 30 that are alternately arranged in sequence along the length direction of the current collector 10, which shortens the battery filling time, while increasing the electrolyte retention volume, improving the wettability of the electrode, and is beneficial to extending the cycle life, thereby improving the battery's service life and performance stability.

In the present application, the active layer 20 is processed to form corresponding grooves 30 and pores 40, which is beneficial to the surface treatment of the active layer 20. The grooves 30 have the function of retaining liquid and guiding liquid, and the pores 40 have the function of retaining liquid. The grooves 30 and the pores 40 effectively improve the liquid retention performance and wettability of the electrode, especially the alternating arrangement of the grooves 30 and the pores 40 improves the uniformity of electrolyte penetration, which is beneficial to ensure the stability of battery performance.

As shown in FIG. 1, the plurality of grooves 30 are arranged in parallel and at equal intervals along the length direction of the current collector 10.

The plurality of grooves 30 are arranged at equal intervals, which is conducive to achieving consistency in liquid retention in the region 210. In addition, the plurality of grooves 30 are arranged in parallel, which is conducive to assisting the subsequent winding to form a battery cell, facilitating bending, and improving the winding efficiency, thereby improving the production efficiency of the battery cell.

In some embodiments, the total thickness L of the current collector 10 and the active layer 20 satisfies 60 µm ≤ L ≤ 200 µm. For example, L may be 60 µm, 80 µm, 100 µm, 120 µm, 140 µm, 160 µm, 180 µm, 200 µm, etc., wherein the thickness of the current collector 10 is 6 µm.

In some embodiments, the groove depth H of the groove 30 of the present application is 10%-70% of the thickness of the active layer 20. If the groove depth of the groove 30 is too large, it will affect the strength of the electrode sheet. If the groove depth of the groove 30 is too small, it will affect the liquid retention effect and wettability.

The groove depth H of the groove 30 of the present application satisfies 3 µm ≤ H ≤ 30 µm.

In some embodiments, along the length direction of the current collector 10, the distance W between the two opposite inner walls of the groove 30 satisfies 20 µm ≤ W ≤ 120 µm, and the two oppositely arranged inner walls form a groove width. If the groove width is too wide, it will affect the strength of the electrode sheet. If the groove width of the groove 30 is too small, it will affect the liquid retention effect and wettability.

In some embodiments, along the length direction of the current collector 10, the spacing S between two adjacent grooves 30 satisfies 0.5 mm ≤ S ≤ 5 mm. If the gap between the two grooves 30 is too large, it is not conducive to the liquid retention effect and wettability. If the gap between the two grooves 30 is too small, it will affect the strength of the electrode sheet. The setting of the parameters of the grooves 30 of the present application optimizes the permeability of the electrolyte, and also strengthens the mechanical strength of the electrode sheet, ensuring the stable operation of the battery.

In one exemplary implementation of some embodiments, as shown in FIG. 1, along the width direction of the current collector 10, the extension length of the groove 30 is equal to the width of the active layer 20.

In one exemplary implementation of some embodiments, as shown in FIG. 2, along the width direction of the current collector 10, the distance T between two ends of the groove 30 and the edge of the active layer 20 satisfies: 0 mm < T ≤ 8 mm.

The distance H between two ends of the pore 40 and the edge of the active layer 20 also satisfies 0 mm < H ≤ 8 mm. Exemplarily, H is the distance between the center of the pore 40 and the edge of the active layer 20.

The arrangement of the grooves 30 is beneficial to improving the circulation efficiency of the electrolyte, allowing the electrolyte to flow on this surface, thereby helping to improve the wettability of the entire negative electrode sheet of battery.

In some embodiments, a plurality of pores 40 are disposed in each region 210, and the plurality of pores 40 are disposed at equal intervals along the length and width directions of the current collector 10. The arrangement of the pores 40 disposed at equal intervals is conducive to improving the uniformity of penetration, and the plurality of pores 40 disposed at intervals have a liquid retention effect, and the arrangement of the pores 40 does not affect the strength of the electrode sheet.

In some embodiments, the depth h of the pores 40 satisfies 5 µm ≤ h ≤ 50 µm, the diameter D of the pores 40 satisfies 10 µm ≤ D ≤ 100 µm, and the distance L between two adjacent pores 40 satisfies 50 µm ≤ L ≤ 300 µm.

In some embodiments, the specific parameters of the pore depth, diameter and pore spacing of the pores 40 can be adaptively set according to the size of the current collector 10. A pore depth that is too large or a diameter that is too large will affect the strength of the electrode sheet, a pore depth that is too large or a diameter that is too small will affect the liquid retention capacity and wettability, a pore spacing that is too large will affect the liquid retention capacity, and a pore spacing that is too small will affect the strength of the electrode sheet.

In some embodiments, the opening of the pore 40 is circular or elliptical, and the specific shape of the pore 40 can be adaptively set according to needs.

In one specific embodiment, some of the pores are structured to have a circular opening, and the other of the pores are structured to have an elliptical opening.

In some embodiments, the spacing between two adjacent grooves 30 is S, the spacing between two adjacent pores 40 is L, and the plurality of pores 40 in each region 210 are formed in n rows, where n = ROUND (S*1000/L,0) -1. This precise arrangement can maximize the penetration efficiency and distribution uniformity of the electrolyte while maintaining the structural stability of the negative electrode sheet.

The number of rows formed by the pores 40 is adaptively set according to the setting of the pore spacing and the groove spacing.

In some embodiments, when the current collector 10 is a carbon-coated copper foil, the thickness of the copper foil is 3-12 µm, and the thickness of the carbon-coated layer of the carbon-coated copper foil is 0.2-2 µm.

In some embodiments, the active layer 20 includes a negative electrode active material, a conductive agent, a thickener and a binder, the negative electrode active material includes one or two of graphite, hard carbon, silicon carbon and silicon oxygen materials; the conductive agent includes one, two or three of conductive carbon black, conductive graphite, single-walled carbon nanotubes, multi-walled carbon nanotubes, graphene and conductive carbon fibers; the thickener includes one or two of sodium carboxymethyl cellulose and acrylic acid derivative copolymers; the binder includes one or two of butadiene-styrene binders, styrene-acrylic binders or acrylic acid derivative copolymers.

In some embodiments, the active layer 20 may have a single-layer structure or a multi-layer structure.

In some embodiments, the coating includes continuous coating or discontinuous coating.

In some embodiments, laser grooving and laser pore forming on the surface of the negative electrode sheet of battery are performed after coating the battery negative electrode or after rolling the negative electrode.

In some embodiments, active layers 20 are formed on both sides of the current collector 10 along the thickness direction.

For example, by providing the active layer 20 on both sides of the current collector 10, it is beneficial to improve the electrolyte infiltration efficiency and liquid retention effect, and also has a better protection effect.

In one exemplary implementation of some embodiments, along the thickness direction of the current collector 10, the grooves 30 on both sides are symmetrically arranged with respect to the current collector 10.

The symmetrically arranged groove 30 is beneficial to improving the circulation efficiency of the electrolyte, thereby accelerating the electrolyte infiltration efficiency and improving the electrolyte retention effect.

In some embodiments, the grooves 30 and the pores 40 on both sides of the current collector 10 are symmetrically arranged.

In another exemplary implementation of some embodiments, active layers 20 are disposed on both sides of the current collector 10 along the thickness direction of the current collector 10, and the grooves 30 on the active layers 20 on both sides are arranged offset with respect to the length direction of the current collector 10.

The offset arrangement of the grooves 30 on both sides is beneficial to ensuring the structural strength of the negative electrode sheet of the battery, while also having good liquid retention capacity and infiltration effect.

In this embodiment, the grooves 30 and the pores 40 on both sides of the current collector 10 are arranged offset with respect to the length direction of the current collector 10, that is, formed by intermittent coating.

From the above description, it can be seen that the embodiments of the present application achieve the following technical effects:
The negative electrode sheet of battery according to the present application has pores 40 and grooves 30 which are alternately arranged in sequence along the length direction of the current collector 10, which shortens the battery filling time, increases the electrolyte retention volume, improves the electrode wettability, and is beneficial to extend the cycle life, thereby improving the battery service life and performance stability.

The present application performs processing on the active layer 20 to form corresponding grooves 30 and pores 40, which is beneficial to the surface treatment of the active layer 20. The grooves 30 have the function of retaining liquid and guiding liquid, and the pores 40 have the function of retaining liquid. The grooves 30 and the pores 40 effectively improve the liquid retention performance and wettability of the electrode, especially the alternating arrangement of the grooves 30 and the pores 40 improves the uniformity of electrolyte penetration, which is beneficial to ensure the stability of battery performance.

## Claims

1. A negative electrode sheet (100) of a battery, comprising:
a current collector (10); and
an active layer (20), coated on a surface on at least one side of the current collector (10), the active layer (20) having a plurality of grooves (30) arranged in sequence and at intervals along a length direction of the current collector (10), the plurality of grooves (30) each extending along a width direction of the current collector (10), and a plurality of regions (210) in the active layer (20) being separated by the plurality of grooves (30) along the length direction of the current collector (10), each of the plurality of regions (210) having a plurality of pores (40).

2. The negative electrode sheet (100) of the battery according to claim 1, wherein the plurality of grooves (30) are arranged at equal intervals and in parallel along the length direction of the current collector (10).

3. The negative electrode sheet (100) of the battery according to claim 1, wherein a total thickness L of the current collector (10) and the active layer (20) satisfies: 60 µm ≤ L ≤ 200 µm,
wherein a depth H of each of the plurality of grooves (30) is 10%-70% of a thickness of the active layer (20); and/or
along the length direction of the current collector (10), a distance W between two opposite inner walls of each of the plurality of grooves (30) satisfies 20 µm ≤ W ≤ 120 µm; and/or
along the length direction of the current collector (10), a spacing S between adjacent two of the plurality of grooves (30) satisfies 0.5 mm ≤ S ≤ 5 mm.

4. The negative electrode sheet (100) of the battery according to claim 1, wherein an extension length of each of the plurality of grooves (30) along the width direction of the current collector (10) is equal to a width of the active layer (20); or
along the width direction of the current collector (10), a distance T between either end of each of the plurality of grooves (30) and an adjacent edge of the active layer (20) satisfies: 0 mm < T ≤ 8 mm.

5. The negative electrode sheet (100) of the battery according to any one of claims 1 to 4, wherein the plurality of pores (40) are arranged at equal intervals along both the length direction and the width direction of the current collector (10).

6. The negative electrode sheet (100) of the battery according to claim 5, wherein a depth h of each of the plurality of pores (40) satisfies: 5 µm ≤ h ≤ 50 µm; and/or
a diameter D of each of the plurality of pores (40) satisfies: 10 µm ≤ D ≤ 100 µm; and/or
a distance L between two adjacent ones of the plurality of pores (40) satisfies: 50 µm ≤ L ≤ 300 µm.

7. The negative electrode sheet (100) of the battery according to any one of claims 1 to 6, wherein an opening of each of the plurality of pores (40) is circular or elliptical.

8. The negative electrode sheet (100) of the battery according to any one of claims 1 to 7, wherein, along the length direction of the current collector (10), a spacing between two adjacent ones of the plurality of grooves (30) is defined as S, a distance between two adjacent ones of the plurality of pores (40) is defined as L, and the plurality of pores (40) in each of the plurality of regions (210) are formed in n rows, wherein n = ROUND (S*1000/L, 0) -1.

9. The negative electrode sheet (100) of the battery according to any one of claims 1 to 8, wherein the plurality of grooves (30) and the plurality of pores (40) are formed by laser processing.

10. The negative electrode sheet (100) of the battery according to any one of claims 1 to 8, wherein both sides of the current collector (10) are coated with the active layer (20), and the grooves (30) on the two sides of the current collector (10) are arranged symmetrically or offset with respect to the length direction of the current collector (10).

11. A battery, comprising:
a battery cell, comprising: a positive electrode sheet, an electrolyte, a separator and the negative electrode sheet (100) according to any one of claims 1 to 10; and
a casing, in which the battery cell is arranged.
